(19) Europäisches Patentamt / European Patent Office / Office européen des brevets

(11) **EP 4 256 364 B1**

(12) **FASCICULE DE BREVET EUROPEEN**

(45) Date de publication et mention de la délivrance du brevet:
**02.04.2025 Bulletin 2025/14**

(21) Numéro de dépôt: **21815470.6**

(22) Date de dépôt: **17.11.2021**

(51) Classification Internationale des Brevets (IPC):
**G01S 7/02** *(2006.01)* **G01S 13/931** *(2020.01)*

(52) Classification Coopérative des Brevets (CPC):
**G01S 13/931; G01S 7/027;** G01S 2013/93277

(86) Numéro de dépôt international:
**PCT/EP2021/082047**

(87) Numéro de publication internationale:
**WO 2022/117348 (09.06.2022 Gazette 2022/23)**

(54) **ENSEMBLE DE VÉHICULE COMPRENANT UN CAPTEUR RADAR ET UN AGENCEMENT DE COUCHES FORMANT UN LOGO**

FAHRZEUGANORDNUNG MIT EINEM RADARSENSOR UND EINER EIN LOGO BILDENDEN SCHICHTANORDNUNG

VEHICLE ASSEMBLY COMPRISING A RADAR SENSOR AND AN ARRANGEMENT OF LAYERS FORMING A LOGO

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2020 FR 2012488**

(43) Date de publication de la demande:
**11.10.2023 Bulletin 2023/41**

(73) Titulaire: **VALEO VISION**
**93012 Bobigny Cedex (FR)**

(72) Inventeurs:
• **ALBOU, Pierre**
**93012 BOBIGNY (FR)**
• **RENAUD, Pierre**
**93012 Bobigny - Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
EP-A1- 2 573 872     EP-A1- 3 644 087
DE-A1- 102011 115 829     US-A1- 2018 351 274

**Description**

La présente invention se rapporte à un ensemble de véhicule. Elle trouve une application particulière mais non limitative dans les véhicules automobiles.

Un ensemble de véhicule comprend, de manière connue de l'homme du métier :

- un capteur radar configuré pour émettre des ondes radars, et
- un agencement de couches disposé en regard dudit capteur radar.

L'agencement de couches forme un logo illuminé. Le capteur radar est ainsi disposé derrière le logo illuminé et répond à des besoins de détection d'un objet dans l'environnement extérieur du véhicule.

Un inconvénient de cet état de la technique est lorsqu'une onde radar est émise par le capteur radar, elle chemine jusqu'à l'agencement de couches et se réfléchit sur l'agencement de couches. Cela génère deux ondes réfléchies, dont l'une a été réfléchie sur la face extérieure de l'agencement de couches et l'autre à l'intérieur de l'agencement de couches. Les deux ondes réfléchies sont des ondes réfléchies dites d'ordre 1 qui reviennent sur le capteur radar. Cela gêne la propagation des ondes radars. Cela diminue le rapport signal sur bruit dudit capteur radar et entraîne ainsi des perturbations pour la détection par le capteur radar. Le capteur radar perd en portée de détection. Par conséquent, cela peut entraîner une erreur de détection ou aucune détection d'un objet alors que ce dernier est présent dans l'environnement extérieur du véhicule. Les documents DE 10 2011 115829A1, EP 3 644 087A1 et US 2018/351274A1 décrivent des exemples de l'état de la technique.

Dans ce contexte, la présente invention vise à proposer un ensemble de véhicule qui permet de résoudre l'inconvénient mentionné.

A cet effet, l'invention propose un ensemble de véhicule pour véhicule, ledit ensemble de véhicule comprenant :

- une ou plusieurs sources de lumière
- un capteur radar configuré pour émettre des ondes radars sur une plage de longueurs d'onde, et
- un agencement de couches disposé en regard dudit capteur radar, comprenant un premier sous-ensemble de couches configuré pour réaliser une fonction optique, chaque couche ayant un indice de réfraction et une épaisseur, et un deuxième sous-ensemble de couches configuré pour réaliser une protection pour ledit premier ensemble de couches, chaque couche ayant un indice de réfraction et une épaisseur ,
- caractérisé en ce que l'épaisseur totale du deuxième sous-ensemble de couches est dimensionnée de sorte que l'épaisseur totale de l'agencement de couches est égale à m fois une longueur d'onde de ladite plage divisée par deux fois l'indice de réfraction équivalent du premier sous-ensemble de couches et du deuxième sous-ensemble de couches, fois le cosinus d'un angle réfracté correspondant à l'angle d'incidence des ondes radars, avec m entier.

Selon des modes de réalisation non limitatifs, ledit ensemble de véhicule peut comporter en outre une ou plusieurs caractéristiques supplémentaires prises seules ou selon toutes les combinaisons techniquement possibles, parmi les suivantes.

Selon un mode de réalisation non limitatif, ledit capteur radar est un capteur radar à ondes millimétriques ou hyperfréquences ou micro-ondes.

Selon un mode de réalisation non limitatif, lesdites ondes radars sont émises sur une bande de fréquence comprise entre 100MHz et 5GHz.

Selon un mode de réalisation non limitatif, si l'angle d'incidence est égal à zéro, alors l'épaisseur totale du deuxième sous-ensemble de couches est dimensionnée de sorte que l'épaisseur totale de l'agencement de couches est égale à ladite longueur d'onde divisée par deux fois l'indice de réfraction équivalent du premier sous-ensemble de couches et du deuxième sous-ensemble de couches.

Selon un mode de réalisation non limitatif, l'épaisseur totale est définie avec un angle d'incidence égal à $arctan(d1/(2e4))$, avec e4 la distance entre ledit capteur radar et ledit agencement de couches et d1 la distance entre une antenne émettrice et des antennes réceptrices dudit capteur radar.

Selon un mode de réalisation non limitatif, le deuxième sous-ensemble de couches comprend une couche de sortie et une couche de protection. La couche de protection est une couche anti-ultra-violets et/ou anti-rayures.

Selon un mode de réalisation non limitatif, ladite couche de sortie possède un indice de réfraction qui présente une différence avec un indice de réfraction équivalent du premier sous-ensemble de couches inférieure à 0.1.

Selon un mode de réalisation non limitatif, ladite couche de sortie possède un indice de réfraction qui présente une différence avec un indice de réfraction équivalent du premier sous-ensemble de couches inférieure à 0.05.

Selon un mode de réalisation non limitatif, chaque couche du premier sous-ensemble possède un indice de réfraction qui présente une différence avec l'indice de réfraction d'une couche adjacente inférieure à 0.1.

Selon un mode de réalisation non limitatif, chaque couche du premier sous-ensemble possède un indice de réfraction qui présente une différence avec l'indice de réfraction d'une couche adjacente inférieure à 0.05.

Selon un mode de réalisation non limitatif, le premier sous-ensemble de couches comprend :

- une couche de film,
- une couche diffusante,
- une couche réfléchissante, et
- une couche opaque.

Selon un mode de réalisation non limitatif, l'agencement de couches forme un logo non illuminé.

Selon un mode de réalisation non limitatif, l'agencement de couches forme un logo illuminé.

Selon un mode de réalisation non limitatif, le premier sous-ensemble de couches comprend en outre une couche optique.

Selon un mode de réalisation non limitatif, le premier sous-ensemble de couches comprend en outre :

- une autre couche opaque,
- une autre couche réfléchissante.

Selon un mode de réalisation non limitatif, le premier sous-ensemble de couches comprend en outre une couche protectrice.

Il est en outre proposé un agencement de couches disposé en regard d'un capteur radar, ledit capteur radar étant configuré pour émettre des ondes radars sur une plage de longueurs d'onde, ledit agencement de couches comprenant un premier sous-ensemble de couches configuré pour réaliser une fonction optique, chaque couche ayant un indice de réfraction et une épaisseur, et un deuxième sous-ensemble de couches configuré pour réaliser une protection pour le premier ensemble de couches, chaque couche ayant un indice de réfraction et une épaisseur, - caractérisé en ce que l'épaisseur totale du deuxième sous-ensemble de couches est dimensionnée de sorte que l'épaisseur totale de l'agencement de couches est égale à m fois une longueur d'onde de ladite plage divisée par deux fois l'indice de réfraction équivalent du premier sous-ensemble de couches et du deuxième sous-ensemble de couches, fois le cosinus d'un angle réfracté correspondant à l'angle d'incidence des ondes radars, avec m entier.

L'invention et ses différentes applications seront mieux comprises à la lecture de la description qui suit et à l'examen des figures qui l'accompagnent :

[Fig. 1] est une vue schématique d'un ensemble de véhicule, ledit ensemble de véhicule comprenant un capteur radar et un agencement de couches, selon un mode de réalisation non limitatif de l'invention,

[Fig. 2] est une vue schématique d'une onde radar émise par le capteur radar de l'ensemble de véhicule de la figure 1 qui se réfléchit partiellement sur l'agencement de couches de l'ensemble de véhicule de la figure 1, selon un mode de réalisation non limitatif,

[Fig. 3] est une vue schématique des couches de l'agencement de couches de l'ensemble de véhicule de la figure 1, ledit agencement de couches comprenant un premier sous-ensemble de couches et un deuxième sous-ensemble de couches, selon un mode de réalisation non limitatif.

Les éléments identiques, par structure ou par fonction, apparaissant sur différentes figures conservent, sauf précision contraire, les mêmes références.

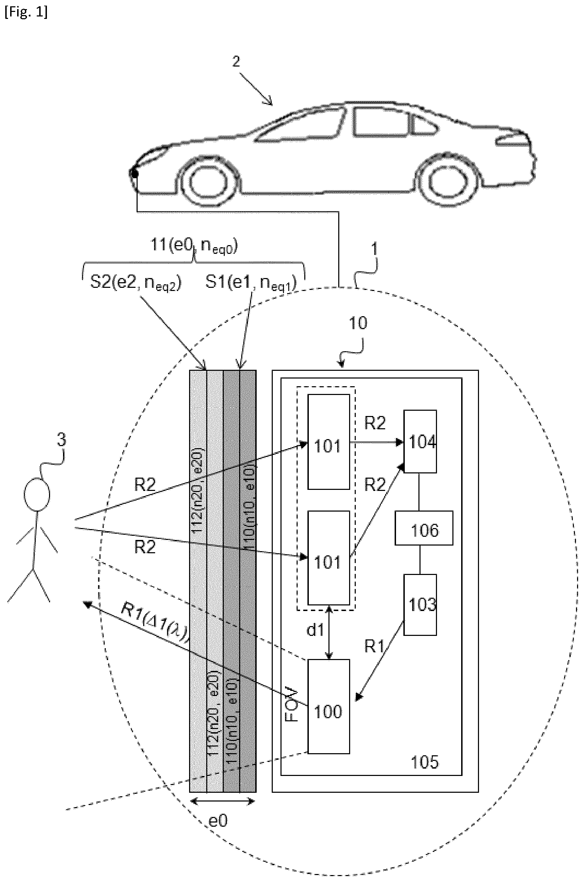

L'ensemble de véhicule 1 d'un véhicule 2 selon l'invention est décrit en référence aux figures 1 à 3. L'ensemble de véhicule 1 est autrement appelé système de véhicule 1. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule 2 est ainsi autrement appelé véhicule automobile 2. Dans un mode de réalisation non limitatif, l'ensemble de véhicule 1 est disposé dans la grille du véhicule automobile 2. Dans un autre mode de réalisation non limitatif, l'ensemble de véhicule 1 peut être intégré à une pièce de carrosserie située à l'arrière du véhicule automobile 2.

Tel qu'illustré sur la figure 1, l'ensemble de véhicule 1, autrement appelé agencement de véhicule 1, comprend :

- un capteur radar 10 configuré pour émettre des ondes radars R1, et
- un agencement de couches 11 disposé en regard dudit capteur radar 10.

Ces éléments sont décrits ci-après.

Le capteur radar 10 est décrit ci-après. Tel qu'illustré sur la figure 1, le capteur radar 10 est disposé en regard de l'agencement de couches 11. Dans un mode de réalisation non limitatif, le capteur radar 10 est un capteur radar à ondes millimétriques (entre 24GHz et 300 GHz) ou hyperfréquences (entre 300MHz et 81GHz) ou micro-ondes (entre 1GHz et 300GHz). Dans une variante de réalisation non limitative, le capteur radar 10 fonctionne à une fréquence radar comprise entre 76GHz et 81GHz. Les ondes radars R1 sont émises sur une plage ∆1 de longueurs d'onde λ. Dans un mode de réalisation non limitatif, les ondes radars R1 sont émises sur une bande de fréquence comprise entre 100MHz et 5GHz. Ainsi, dans un exemple non limitatif, si le capteur fonctionne à une fréquence radar de 77GHz, soit une longueur d'onde λ de 3.95mm, avec une bande de fréquence de 1GHz, le capteur radar 10 fonctionnera sur une bande de fréquence de 76.5GHZ à 77.5GHz. Les ondes radars R1 seront ainsi émises sur la plage de fréquence 76.5GHZ à 77.5GHz, soit une plage ∆1 de longueurs d'onde λ de 3.87mm à 3.92mm. Ainsi, dans autre un exemple non limitatif, si le capteur radar 10 fonctionne à une fréquence radar de 78.5GHz avec une bande de fréquence de 5GHz, le capteur radar 10 fonctionnera sur une bande de fréquence de 76GHZ à 81GHz. Les ondes radars R1 seront ainsi émises sur la plage de fréquence 76GHZ à 81GHz, soit une plage ∆1 de longueurs d'onde λ de 3.701mm à 3.945mm.

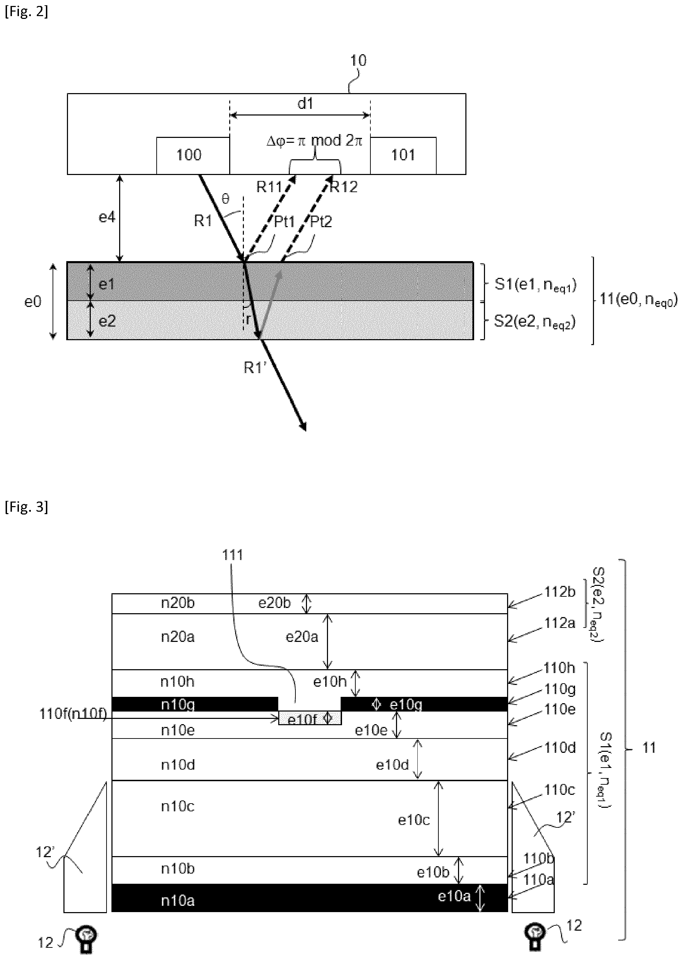

Tel qu'illustré sur la figure 2, les ondes radars R1 émises arrivent avec un angle d'incidence θ sur l'agencement de couches 11. Dans un mode de réalisation non limitatif, l'angle d'incidence θ est compris entre 0° et +-30°. Ainsi, le capteur radar 10 comprend un champ de vision FOV qui varie ainsi entre -30° et +30°. °. Le centre du champ de vision FOV est un angle de 0° par rapport à l'axe longitudinal du véhicule, autrement appelé axe du véhicule. Dans un autre mode de réalisation non limitatif, le champ de vision FOV varie entre -90° et +45°. Le centre du champ de vision FOV est un angle de -45° par rapport à l'axe du véhicule et l'angle d'incidence θ des ondes radars R1 sur l'agencement de couches 11 restent proches de 0° (l'ensemble de véhicule 1 étant positionné alors à environ 45° de l'axe du véhicule).

Le capteur radar 10 est configuré pour scanner l'environnement extérieur du véhicule automobile 2, grâce à l'émission d'ondes radars R1. Tel qu'illustré sur la figure 1, le capteur radar 10 comprend ainsi :

- au moins une antenne émettrice 100 configurée pour émettre des ondes radars R1, autrement appelées ondes radars primaires R1,
- au moins deux antennes réceptrices 101 configurées pour recevoir des ondes radars R2, autrement appelées ondes radars secondaires R2 ou ondes radars de retour R2.

Le capteur radar 10 comprend en outre au moins un émetteur 103 configuré pour générer les ondes radars primaires R1 et au moins un récepteur 104 configuré pour traiter les ondes radars secondaires R2 reçues en retour. Dans un mode de réalisation non limitatif, un seul composant électronique peut être utilisé pour les deux fonctions émission et réception. On aura ainsi un ou plusieurs émetteur/récepteur appelés « transceiver » dans le langage anglo-saxon. Ledit émetteur 103 génère des ondes radars primaires R1 qui sont par la suite émises par l'antenne émettrice 100, qui lorsqu'elles rencontrent un objet 3 (ici un piéton dans l'exemple non limitatif illustré) dans l'environnement extérieur du véhicule automobile 2 se réfléchissent sur ledit objet 3. Les ondes radars ainsi réfléchies sont des ondes transmises en retour au capteur radar 10. Ce sont les ondes radars secondaires R2 reçues par les antennes réceptrices 101. Ce sont des ondes radars retransmises en direction du capteur radar 10. Dans un mode de réalisation non limitatif, les ondes radars primaires R1 et les ondes radars secondaires R2 sont des ondes radio fréquence. Dans un mode de réalisation non limitatif, le capteur radar 10 comprend une pluralité d'émetteurs 103 et une pluralité de récepteurs 104.

L'antenne émettrice 100, autrement appelée antenne 100, est configurée pour émettre les ondes radars primaires R1 générées par l'émetteur 103. Les antennes réceptrices 101, autrement appelées antennes 101, sont configurées pour recevoir les ondes radars secondaires R2 et les communiquer au récepteur 104 qui les traite par la suite. Il existe un déphasage entre les ondes radars secondaires R2 reçues par les antennes réceptrices 101 qui permet d'en déduire la position angulaire de l'objet 3 par rapport au véhicule automobile 2, objet 3 qui se trouve dans l'environnement extérieur du véhicule automobile 2. Dans des modes de réalisation non limitatifs, les antennes 100, 101 sont des antennes pastilles autrement appelée dans le langage anglo-saxon « patch antenna » ou des antennes à fente autrement appelée dans le langage anglo-saxon « slot antenna ».

Dans un mode de réalisation non limitatif, les antennes 100, 101, l'émetteur 103 et le récepteur 104 sont disposés sur une carte à circuit imprimé 105. Dans un mode de réalisation non limitatif, la carte à circuit imprimé est une carte à circuit imprimé rigide autrement appelée PCBA (« Printed Circuit Board Assembly » dans le langage anglo-saxon ou une carte à circuit imprimé flexible, autrement appelé « Flexboard » dans le langage anglo-saxon.

Le capteur radar 10 comprend en outre une unité de contrôle électronique 106 configurée pour contrôler l'émetteur 103 et le récepteur 104. Un capteur radar étant connu de l'homme du métier, il n'est pas décrit plus en détail ici.

L'agencement de couches 11 est décrit ci-après. Tel qu'illustré sur la figure 1 ou la figure 3, il comprend :

- un premier sous-ensemble S1 de couches 110 configuré pour réaliser une fonction optique, et
- un deuxième sous-ensemble S2 de couches 112 configuré pour réaliser une protection pour ledit premier ensemble S1 de couches 110.

On notera que la figure 1 étant une vue schématique, seules deux couches 110 ont été illustrées sur la figure 1. Dans la suite de la description, le premier sous-ensemble S1 de couches 110 est autrement appelé premier sous-ensemble S1, et le deuxième sous-ensemble S2 de couches 112 est autrement appelé deuxième sous-ensemble S2. Dans des modes de réalisation non limitatifs, l'agencement de couches 11 forme un logo illuminé ou un logo non illuminé. Dans le cas d'un logo illuminé, l'ensemble de véhicule 1 comprend une ou plusieurs sources de lumière 12. Le mode de réalisation non limitatif d'un logo illuminé est pris comme exemple dans la suite de la description.

En effet, tel qu'illustré sur la figure 3, dans un mode de réalisation non limitatif, le logo est éclairé par deux sources de lumière 12. Dans l'exemple non limitatif illustré, les sources de lumière 12 sont disposées sur les côtés du premier sous-ensemble S1 de couches 110. Un dispositif optique 12' à réflexion totale permet d'injecter la lumière émise par les sources de lumière 12 à l'intérieur d'une couche 110c décrite plus loin. Dans un mode de réalisation non limitatif, les sources de lumière 12 sont des sources de lumière à semi-conducteur. Dans un mode de réalisation non limitatif, les sources de lumière à semi-conducteur font partie d'une diode électroluminescente. Par diode électroluminescente, on entend tout type de diodes électroluminescentes, que ce soit dans des exemples non limitatifs des LED (« Light Emitting Diode »), des OLED (« organic LED »), des AMOLED (Active-Matrix-Organic LED), ou encore des FOLED (Flexible OLED). Dans un autre mode de réalisation non limitatif, les sources de lumière 12 est une ampoule avec un filament.

Tel qu'illustré sur la figure 1, le premier sous-ensemble S1 de couches 110 est disposé en regard du capteur radar 10, tandis que le deuxième sous-ensemble S2 de couches 112 est adjacent au premier sous-ensemble S1 de couches 110 et est disposé en regard de l'extérieur du véhicule automobile 2.

Tel qu'illustré sur la figure 3, chaque couche 110 du premier sous-ensemble S1 possède un indice de réfraction n10 et une épaisseur e10. Le premier sous-ensemble S1 comprend une épaisseur totale e1 composée de toutes les épaisseurs e10. Chaque couche 112 du deuxième sous-ensemble S2 possède un indice de réfraction n20 et une épaisseur e20. Le deuxième sous-ensemble S2 comprend une épaisseur totale e2 composée de toutes les épaisseurs e20. L'agencement de couches 11 comprend ainsi une épaisseur totale e0=e1+e2.

Dans un mode de réalisation non limitatif, le premier sous-ensemble S1 de couches 110 comprend une couche optique 110c. La couche optique 110c se trouve en regard du capteur radar 10. La couche optique 110c permet de transmettre les rayons lumineux des sources de lumières 12. La couche optique 110c est une couche transparente à la fois aux ondes radars R1, R2 et à la lumière visible. Dans des modes de réalisation non limitatifs, la couche optique 110c peut être un guide de lumière ou une lentille avec des prismes.

Tel qu'illustré sur la figure 3, dans un mode de réalisation non limitatif, le premier sous-ensemble S1 de couches 110 comprend les couches 110 successives suivantes :

- la couche optique 110c,
- une couche de film 110d,
- une couche diffusante 110e,
- une couche réfléchissante 110f,
- une couche opaque 110g.

Toutes les couches 110 sauf la couche réfléchissante 110f sont des couches diélectriques ce qui leur permet d'être transparentes aux ondes radars R1, R2. La couche réfléchissante 110f est plus absorbante, mais d'épaisseur très faible ce qui permet aux ondes radars R1 de la traverser également. Dans un mode de réalisation non limitatif, la couche réfléchissante 110f est réalisée en indium. Dans des modes de réalisation non limitatifs, une couche diélectrique est formée d'un matériau en plastique, en verre ou en céramique. Dans un exemple non limitatif, le plastique est du polycarbonate (PC). On rappelle qu'un matériau diélectrique est non conducteur et laisse donc passer les ondes radars R1 contrairement à un matériau conducteur.

Dans ce mode de réalisation non limitatif, la couche optique 110c sert de support pour la couche de film 110d. La couche de film 110d est disposée entre la couche optique 110c et la couche réfléchissante 110f. La couche de film 110d est dans un exemple non limitatif réalisé en PC-IML (polycarbonate In Mold Labeling).

La couche diffusante 110e est disposée entre la couche de film 110d et la couche opaque 110g. La couche diffusante 110e permet de créer une source secondaire localisée au niveau de ladite couche diffusante 110e. Cela permet ainsi de percevoir le dessin du logo illuminé à l'endroit de ladite couche diffusante 110e. Dans un mode de réalisation non limitatif, la couche diffusante 110e est disposée en regard de l'ouverture 111 réalisée dans la couche opaque 110g. L'ouverture 111 permet de réaliser le dessin du logo.

La couche opaque 110g est disposée en regard du deuxième ensemble S2 de couches 112. La couche opaque 110g permet de masquer et d'éclairer une zone bien déterminée. Elle permet de réaliser un motif pour le logo illuminé.

La couche réfléchissante 110f permet de donner un aspect métallique en lumière visible quand on observe le logo depuis l'extérieur. La couche réfléchissante 110f peut s'étendre sous toute la couche opaque 110g.

Tel qu'illustré sur la figure 3, dans un mode de réalisation non limitatif, le premier sous-ensemble S1 de couches 110 comprend en outre :

- une autre couche opaque 110a,
- une autre couche réfléchissante 110b.

Cette autre couche opaque 110a lorsqu'elle existe est disposée en regard du capteur radar 10 et est adjacente à cette autre couche réfléchissante 110b. Elle évite les fuites de lumière derrière le logo illuminé qui se verraient depuis l'extérieur du véhicule automobile 2. Elle absorbe la lumière des sources de lumières 12.

Cette autre couche réfléchissante 110b lorsqu'elle existe est disposée entre la couche opaque 110a et la couche optique 110c. Cette autre couche réfléchissante 110b est dans un mode de réalisation non limitatif de la peinture blanche. Elle permet que les rayons lumineux émis par les sources de lumière 12 se réfléchissent vers le centre de l'agencement de couches 11.

Tel qu'illustré sur la figure 3, dans un mode de réalisation non limitatif, le premier sous-ensemble S1 de couches 110 comprend en outre une couche protectrice 110h pour éviter une oxydation des autres couches 110, notamment de la couche réfléchissante 110f. Cette couche protectrice 110h est disposée entre la couche opaque 110g et le deuxième ensemble S2 de couches 112.

Dans un mode de réalisation non limitatif, le deuxième sous-ensemble S2 de couches 112 comprend une couche de sortie 112a qui forme une glace de sortie du logo illuminé, et une couche de protection 112b qui permet d'éviter le jaunissement du plastique de la glace de sortie 112a notamment et également de la couche protectrice 110h, en arrêtant les ultra-violets. Dans un mode de réalisation non limitatif, la couche de protection 112b peut être également une couche anti-rayures. Dans un mode de réalisation non limitatif, la couche de sortie 112a est réalisé en PC. C'est une couche transparente à la fois aux ondes radars R1, R2 et à la lumière visible. Dans un mode de réalisation non limitatif, la couche de protection 112b comprend une épaisseur e20b de 50micromètres. Dans un mode de réalisation non limitatif, la couche de protection 112b est un dépôt d'un vernis protecteur.

On notera qu'il est possible de considérer que l'ensemble des couches 110 du premier sous-ensemble S1 équivaut à une seule couche équivalente d'épaisseur totale e1 avec un indice de réfraction équivalent $n_{eq1}$ lorsque les couches 110 présentent chacune un indice de réfraction n10 très proche de l'indice de réfraction n10 d'une autre couche 110 adjacente, autrement dit contiguë. Ainsi, dans un mode de réalisation non limitatif, chaque couche 110 possède un indice de réfraction n10 qui présente une différence avec l'indice de réfraction n10 d'une couche 110 adjacente inférieure à 0.1. Ce seuil permet également de rendre négligeable les ondes réfléchies internes entre les couches 110 du premier sous-ensemble S1. Dans une variante de réalisation non limitative de ce mode de réalisation non limitatif, la différence est inférieure à 0.05.

De même, on notera qu'il est possible de considérer que l'ensemble des couches 112 du deuxième sous-ensemble S2 équivaut à une seule couche équivalente d'épaisseur totale e2 avec un indice de réfraction équivalent $n_{eq2}$ lorsque les couches 112 présentent chacune un indice de réfraction n20 très proche de l'indice de réfraction n20 d'une couche 112 adjacente, autrement dit contiguë. Ainsi, dans un mode de réalisation non limitatif, chaque couche 112 possède un indice de réfraction n20 qui présente une différence avec l'indice de réfraction n20 d'une couche 112 adjacente inférieure à 0.1. Ce seuil permet également de rendre négligeable les ondes réfléchies internes entre les couches 112 du deuxième sous-ensemble S2. Autrement dit, la couche de sortie 112a possède un indice de réfraction n20a qui présente une différence avec l'indice de réfraction n20b de la couche de protection 112b qui lui est adjacente inférieure à 0.1. Dans une variante de réalisation non limitative de ce mode de réalisation non limitatif, la différence est inférieure à 0.05.

Le premier sous-ensemble S1 possède un indice de réfraction équivalent $n_{eq1}$. Pour calculer l'indice de réfraction équivalent $n_{eq1}$, on le calcule de proche en proche. Ainsi, on commence par calculer l'indice de réfraction équivalent $n_{eqa}$ pour les deux premières couches 110a, 110b adjacentes, soit :

[Math 1]

$$n_{eqa} = \frac{n_{10a}n_{10b}(e_{10a}+e_{10b})}{n_{10b}e_{10a}+n_{10a}e_{10b}} = \frac{n_{10a}n_{10b}\left(1+\frac{e_{10b}}{e_{10a}}\right)}{n_{10b}+n_{10a}\left(\frac{e_{10b}}{e_{10a}}\right)}$$

On remplace ainsi les deux couches 110a et 110b par une seule couche d'épaisseur totale $e_a$=e10a+e10b identique aux deux couches. On calcule ensuite l'indice de réfraction équivalent entre cette couche obtenue d'indice équivalent $n_{eqa}$ et la couche suivante adjacente, à savoir ici 110c, et ainsi de suite.

Ainsi, le premier sous-ensemble S1 possède un indice de réfraction équivalent $n_{eq1}$ égal à :

[Math 2]

$$n_{eq1} = \frac{n_{eqe}n_{10h}(e_e+e_{10h})}{n_{10h}e_e + n_{eqe}e_{10h}} = \frac{n_{eqe}n_{10h}\left(1+\frac{e_{10h}}{e_e}\right)}{n_{10h}+n_{eqe}\left(\frac{e_{10h}}{e_e}\right)}$$

Avec $e_e$ l'épaisseur totale des couches 110a à 110g, et $n_{eqe}$ l'indice équivalent des couches 110a à 110g.

Le deuxième sous-ensemble S2 possède un indice de réfraction équivalent $n_{eq2}$ égal à :

[Math 3]

$$n_{eq2} = \frac{n_{20a}n_{20b}(e_{20a}+e_{20b})}{n_{20b}e_{20a} + n_{20a}e_{20b}} = \frac{n_{20a}n_{20b}\left(1+\frac{e_{20b}}{e_{20a}}\right)}{n_{20b}+n_{20a}\left(\frac{e_{20b}}{e_{20a}}\right)}$$

On obtient donc l'indice de réfraction équivalent $n_{eq0}$ du premier sous-ensemble S1 et du deuxième sous-ensemble S2 :

[Math 4]

$$n_{eq0} = \frac{n_{eq1}n_{eq2}(e_1+e_2)}{n_{eq2}e_1 + n_{eq1}e_2} = \frac{n_{eq1}n_{eq2}\left(1+\frac{e_2}{e_1}\right)}{n_{eq2}+n_{eq1}\left(\frac{e_2}{e_1}\right)}$$

On notera qu'un indice de réfraction n est calculable à partir de la permittivité d'une couche. Ce calcul étant connu de l'homme du métier, il n'est pas décrit ici.

Tel qu'illustré sur la figure 2, lorsque une onde radar R1 est émise par le capteur radar 10, elle chemine jusqu'à l'agencement de couches 11 qui possède un indice de réfraction équivalent $n_{eq0}$, et une épaisseur totale e0.

L'onde radar R1 se réfléchit sur l'agencement de couches 11 et génère deux ondes réfléchies, dont l'une R11 a été réfléchie sur la face extérieure du premier sous-ensemble S1 et l'autre à l'intérieur de l'agencement de couches 11. Les deux ondes réfléchies R11 et R12 sont des ondes réfléchies dites d'ordre 1 qui reviennent sur le capteur radar 10. Ce sont des réflexions parasites. Lorsque l'angle d'incidence θ est différent de 0°, l'angle réfracté correspondant référencé r est différent de 0° également.

La différence de phase Δφ, autrement appelée déphasage Δφ, entre ces deux ondes réfléchies R11 et R12 est égal à :

[Math5]

$$\Delta\varphi = \frac{n_{eq0}\delta}{\lambda} + \pi - \frac{2e0\,tan(r)sin(\theta)}{\lambda}$$

Avec :

- $n_{eq0}$, l'indice de réfraction équivalent totale pour le premier sous-ensembles S1 et le deuxième sous-ensembles S2,
- δ le trajet de l'onde réfléchie R12 dans la matière égal à 2e0 /cos(r),
- nδ/ λ le déphasage dû au parcours dans la matière,
- π le déphasage dû à la réflexion interne dans le premier sous-ensemble S1 et le deuxième sous-ensemble S2,

    - - ((2e0 tan(r) sin(θ))/λ) le déphasage dans l'air dû l'écart entre le point de réflexion Pt1 de l'onde réfléchie R11 et le point d'émergence Pt2 de l'onde réfléchie R12.

Comme $\sin(\theta) = n_{eq0} \times \sin(r)$, on obtient :

[Math6]

$$\frac{-2e0\,tan(r)sin(\theta)}{\lambda} = \frac{-2e0 n_{eq0} sin(r)^2}{\lambda cos(r)}$$

Soit :

[Math7]

$$\Delta\varphi = \pi + \frac{2n_{eq0}e0}{\lambda cos(r)}(1 - sin(r)^2) = \pi + \frac{2n_{eq0}e0cos(r)}{\lambda}$$

et ce quelque soit la valeur de l'angle réfracté r.

Comme les ondes réfléchies R11 et R12 reviennent en direction du capteur radar 10, elles entraînent des perturbations sur le capteur radar 10, à savoir une atténuation du rapport signal sur bruit. Afin de supprimer ces perturbations, on va définir l'épaisseur totale e0 de l'agencement de couches 11 de sorte que les ondes réfléchies R11 et R12 soient en opposition de phase pour créer des interférences destructrices. Pour obtenir des interférences destructrices, la différence de phase $\Delta\varphi$ entre les deux ondes réfléchies R11 et R12 doit être égale à $\pi$ modulo $2\pi$. Ainsi, on a $\Delta\varphi = (2m+1)^*\pi$, avec m un entier naturel. On obtient donc :

[Math 8]

$$(2m + 1)\,\pi = \pi + \frac{2n_{eq0}e0cos(r)}{\lambda}$$

Soit :

$$\text{Soit } e0 = m\,\lambda / (2n_{eq0}\cos(r)).$$

On notera que l'équation $e0 = m\,\lambda / (2n_{eq}\cos(r))$ est appliquée quelle que soit la valeur de l'angle r. Ainsi, cette épaisseur totale e0 est dimensionnée de sorte qu'elle soit égale à m fois une longueur d'onde $\lambda$ de ladite plage $\Delta1$ le tout divisé par deux fois un indice de réfraction équivalent $n_{eq0}$ du premier sous-ensemble S1 de couches 110 et du deuxième sous-ensemble S2 de couches 112, fois le cosinus d'un angle réfracté r correspondant à l'angle d'incidence $\theta$ des ondes radars R1, avec m entier. Ainsi, à partir de l'indice de réfraction équivalent total $n_{eq0}$ et de la longueur d'onde $\lambda$ utilisée sur la plage de fréquence de fonctionnement du capteur radar 10, l'épaisseur totale e0 de l'agencement de couches 11 peut être déterminée de sorte que lesdites ondes réfléchies R11 et R12 s'annulent entre elles. Dans un mode de réalisation non limitatif, la longueur d'onde $\lambda$ choisie est celle du milieu de ladite plage $\Delta1$.

Une épaisseur totale e0 idéale est définie lorsque l'angle d'incidence est égal à 0; et m est égal à 1. Lorsque $\theta = 0$, r = 0. En conséquence pour m=1, l'épaisseur totale e0 idéale de l'agencement de couches 11 est donc $e0 = \lambda / (2n_{eq0})$. Quand r = 0°, à savoir cos (r) = 1.

L'agencement de couches 11 comprend une épaisseur totale e0 formée par l'épaisseur totale e1 du premier sous-ensemble S1 de couches 110 et par l'épaisseur totale e2 du deuxième sous-ensemble S2 de couches 112. Comme il est préférable de ne pas jouer sur l'épaisseur totale e1 afin de ne pas modifier les performances optiques du logo illuminé, on va adapter l'épaisseur totale e2 pour obtenir e0 idéale = $\lambda / (2n_{eq0})$ lorsque $\theta = 0$ ou pour obtenir $e0 = m\,\lambda / (2n_{eq0}\cos(r))$ lorsque $\theta \neq 0$. Le fait de jouer sur l'épaisseur totale e2 ne modifie pas les performances optiques du logo illuminé. On notera que dans le cas d'un logo non illuminé, on peut également jouer sur l'épaisseur totale e1, en particulier en modifiant l'épaisseur e10d de la couche de film 110d.

Ainsi, l'épaisseur totale e2 du deuxième sous-ensemble de couches 112 est dimensionnée de sorte que l'épaisseur totale e0 de l'agencement de couches 11 est égale à ladite longueur d'onde $\lambda$ divisée par deux fois l'indice de réfraction équivalent $n_{eq0}$ du premier sous-ensemble S1 de couches 110 et du deuxième sous-ensemble S2 de couches 112, pour un angle d'incidence $\theta$ égal à zéro. Si l'angle d'incidence $\theta$ est différent de zéro, on obtient e0 = m $\lambda$ / ($2n_{eq0}$ cos (r)). Cette équation est appliquée quelle que soit la valeur de l'angle de réfraction r. On notera qu'en pratique on va ajuster l'épaisseur e20a de la couche de sortie 112a. En effet, la couche de protection 112b étant déjà très mince, on ne peut jouer sur son épaisseur e20b.

Dans un mode de réalisation non limitatif, l'agencement de couches 11 comprend une épaisseur totale e0 qui est comprise entre 0,8 et 1,2 fois ladite épaisseur totale e0 idéale. Cette plage de valeurs prend en compte les angles d'émission possibles du capteur radar 10. Les valeurs possibles de l'angle d'incidence $\theta$ sont définies dans les spécifications techniques du capteur radar 10, ce qui signifie que les valeurs possibles de l'angle d'incidence $\theta$ sont en le champ de vision du capteur radar 10. Dans un exemple non limitatif, l'angle d'incidence $\theta$ est compris entre 0° et + -30 °. Cette valeur de plage de 0,8 à 1,2 permet de prendre en compte les tolérances de fabrication de l'épaisseur totale e0.

On notera que les valeurs de l'angle d'incidence $\theta$ sont comprises dans les angles possibles d'émission du capteur radar 10. Les valeurs possibles de l'angle d'incidence $\theta$ sont définies dans les spécifications techniques du capteur radar 10. On notera qu'il existe une valeur de l'angle d'incidence $\theta$ pour laquelle les ondes radars réfléchies R11 et R12 entraînent une perturbation maximum des antennes réceptrices 101 du capteur radar 10. Cet angle d'incidence $\theta$ est appelé angle d'incidence $\theta$ critique. Dans un mode de réalisation non limitatif, cette valeur est égale à $\theta$= arctan(d1/(2e4)), avec d1 la distance entre l'antenne émettrice 100 et les antennes réceptrices 101, e4 la distance entre le capteur radar 10 et l'agencement de couches 11 tel qu'illustré sur la figure 2. Ainsi, la valeur de l'épaisseur totale e0 est déterminée pour un angle d'incidence $\theta$ égal à arctan(d1/(2e4)). On notera que dans un exemple non limitatif, on prend le point milieu des antennes réceptrices 101 pour calculer d1.

Ainsi, en fonction de la valeur de l'indice de réfraction équivalent total $n_{eq0}$ et de la longueur d'onde $\lambda$ utilisée sur la plage de fréquence de fonctionnement du capteur radar 10 (entre 76GHZ à 81GHZ dans l'exemple non limitatif pris), on peut déterminer la valeur de l'épaisseur totale e0, plus particulièrement la valeur de l'épaisseur totale e2 du deuxième sous-ensemble S2 pour que les ondes réfléchies R11 et R12 d'ordre 1 s'annulent entre elles. Ainsi, les antennes réceptrices 101 voient moins de bruit. On arrive à un meilleur rapport signal sur bruit.

On notera que pour éviter qu'il existe des ondes réfléchies internes entre la couche de sortie 112a et le premier sous-ensemble S1 de couches 110, dans un mode de réalisation non limitatif, la couche de sortie 112a possède un indice de réfraction n20a qui présente une différence avec un indice de réfraction équivalent $_{neq1}$ du premier sous-ensemble S1 de couches 110 inférieure à 0.1. Dans une variante de réalisation non limitative, la différence est inférieure à 0.05.

Bien entendu la description de l'invention n'est pas limitée aux modes de réalisation décrits ci-dessus et au domaine décrit ci-dessus. Ainsi, dans un autre mode de réalisation non limitatif, le capteur radar 10 comprend plus d'une antenne émettrice 100 et plus de deux antennes réceptrices 101. Ainsi, dans un autre mode de réalisation non limitatif, les sources de lumière 12 sont intégrées dans une cavité de la couche 110c. Ainsi, dans le mode de réalisation non limitatif d'un logo non illuminé, le premier sous-ensemble S1 ne comprend pas les couches 110a à 110c et éventuellement 110d.

Ainsi, l'invention décrite présente notamment les avantages suivants :

- elle permet de supprimer les ondes réfléchies R11, R12, d'ordre 1 qui se réfléchissent en direction du capteur radar 10. Le ratio signal sur bruit dudit capteur radar 10 n'est ainsi plus réduit. La transmission des ondes radars R1 est améliorée,
- elle permet d'ajuster juste l'épaisseur totale e2 (notamment l'épaisseur e20a de la couche de sortie 112a) du deuxième sous-ensemble S2 sans toucher à l'épaisseur totale e1 du premier sous-ensemble S1 de sorte que les performances optiques du logo illuminé ne soient pas modifiées.

**Revendications**

1.  Ensemble de véhicule (1) pour véhicule (2), ledit ensemble de véhicule (1) comprenant :

    - une ou plusieurs sources de lumière (12)
    - un capteur radar (10) configuré pour émettre des ondes radars (R1) sur une plage ($\Delta$1) de longueurs d'onde ($\lambda$), et
    - un agencement de couches (11) disposé en regard dudit capteur radar (10), comprenant un premier sous-ensemble (S1) de couches (110) configuré pour réaliser une fonction optique, chaque couche (110) ayant un indice de réfraction (n10) et une épaisseur (e10), et un deuxième sous-ensemble (S2) de couches (112) configuré pour réaliser une protection pour ledit premier ensemble (S1) de couches (110), chaque couche (112) ayant un indice de réfraction (n20) et une épaisseur (e20),
    - **caractérisé en ce que** l'épaisseur totale (e2) du deuxième sous-ensemble (S2) de couches (112) est dimensionnée de sorte que l'épaisseur totale (e0) de l'agencement de couches (11) est égale à m fois une longueur d'onde ($\lambda$) de ladite plage ($\Delta 1$) divisée par deux fois l'indice de réfraction équivalent ($n_{eq0}$) du premier sous-ensemble (S1) de couches (110) et du deuxième sous-ensemble (S2) de couches (112), fois le cosinus d'un angle réfracté (r) correspondant à l'angle d'incidence ($\theta$) des ondes radars (R1), avec m entier.

2. Ensemble de véhicule (1), selon la revendication 1, selon lequel ledit capteur radar (10) est un capteur radar à ondes millimétriques ou hyperfréquences ou micro-ondes.

3. Ensemble de véhicule (1), selon la revendication précédente, selon lequel lesdites ondes radars (R1) sont émises sur une bande de fréquence comprise entre 100MHz et 5GHz.

4. Ensemble de véhicule (1) selon l'une quelconque des revendications précédentes, selon lequel si l'angle d'incidence ($\theta$) est égal à zéro, alors l'épaisseur totale (e2) du deuxième sous-ensemble (S2) de couches (112) est dimensionnée de sorte que l'épaisseur totale (e0) de l'agencement de couches (11) est égale à ladite longueur d'onde ($\lambda$) divisée par deux fois l'indice de réfraction équivalent ($n_{eq0}$) du premier sous-ensemble (S1) de couches (110) et du deuxième sous-ensemble (S2) de couches (112).

5. Ensemble de véhicule (1) selon l'une quelconque des revendications précédentes, selon lequel l'épaisseur totale (e0) est définie avec un angle d'incidence ($\theta$) égal à arctan(d1/(2e4)), avec e4 la distance entre ledit capteur radar (10) et ledit agencement de couches (11) et d1 la distance entre une antenne émettrice (100) et des antennes réceptrices (101) dudit capteur radar (10).

6. Ensemble de véhicule (1), selon l'une quelconque des revendications précédentes, selon lequel le deuxième sous-ensemble (S2) de couches (112) comprend une couche de sortie (112a) et une couche de protection (112b).

7. Ensemble de véhicule (1) selon la revendication précédente, selon lequel ladite couche de sortie (112a) possède un indice de réfraction (n20a) qui présente une différence avec un indice de réfraction équivalent ($n_{eq1}$) du premier sous-ensemble (S1) de couches (110) inférieure à 0.1.

8. Ensemble de véhicule (1) selon la revendication précédente, selon lequel ladite couche de sortie (112a) possède un indice de réfraction (n20a) qui présente une différence avec un indice de réfraction équivalent ($n_{eq1}$) du premier sous-ensemble (S1) de couches (110) inférieure à 0.05.

9. Ensemble de véhicule (1) selon l'une quelconque des revendications précédentes, selon lequel chaque couche (110) du premier sous-ensemble (S1) possède un indice de réfraction (n10) qui présente une différence avec l'indice de réfraction (n10) d'une couche (110) adjacente inférieure à 0.1.

10. Ensemble de véhicule (1) selon la revendication précédente, selon lequel chaque couche (110) du premier sous-ensemble (S1) possède un indice de réfraction (n10) qui présente une différence avec l'indice de réfraction (n10) d'une couche (110) adjacente inférieure à 0.05.

11. Ensemble de véhicule (1) selon l'une quelconque des revendications précédentes, selon lequel le premier sous-ensemble (S1) de couches (110) comprend :

   - une couche de film (110d),
   - une couche diffusante (110e),
   - une couche réfléchissante (110f), et
   - une couche opaque (110g).

12. Ensemble de véhicule (1) selon l'une quelconque des revendications précédentes, selon lequel l'agencement de couches (11) forme un logo non illuminé.

13. Ensemble de véhicule (1) selon l'une quelconque des revendications précédentes 1 à 11, selon lequel l'agencement de couches (11) forme un logo illuminé.

14. Ensemble de véhicule (1) selon la revendication précédente, selon lequel le premier sous-ensemble (S1) de couches (110) comprend en outre une couche optique (110c).

15. Agencement de couches (11) disposé en regard d'un capteur radar (10), ledit capteur radar (10) étant configuré pour émettre des ondes radars (R1) sur une plage (Δ1) de longueurs d'onde (λ), ledit agencement de couches (11) comprenant un premier sous-ensemble (S1) de couches (110) configuré pour réaliser une fonction optique, chaque couche (110) ayant un indice de réfraction (n10) et une épaisseur (e10), et un deuxième sous-ensemble (S2) de couches (112) configuré pour réaliser une protection pour le premier ensemble (S1) de couches (110), chaque couche (112) ayant un indice de réfraction (n20) et une épaisseur (e20),

- **caractérisé en ce que** l'épaisseur totale (e2) du deuxième sous-ensemble (S2) de couches (112) est dimensionnée de sorte que l'épaisseur totale (e0) de l'agencement de couches (11) est égale à m fois une longueur d'onde (λ) de ladite plage (Δ1) divisée par deux fois l'indice de réfraction équivalent ($n_{eq0}$) du premier sous-ensemble (S1) de couches (110) et du deuxième sous-ensemble (S2) de couches (112), fois le cosinus d'un angle réfracté (r) correspondant à l'angle d'incidence (θ) des ondes radars (R1), avec m entier.

**Patentansprüche**

1. Fahrzeuganordnung (1) für ein Fahrzeug (2), wobei die Fahrzeuganordnung (1) umfasst:

- eine oder mehrere Lichtquellen (12)
- einen Radarsensor (10), der dazu ausgestaltet ist, Radarwellen (R1) über einen Bereich (Δ1) von Wellenlängen (λ) auszusenden, und
- ein Schichtensystem (11), das gegenüber dem Radarsensor (10) angeordnet ist, umfassend eine erste Unteranordnung (S1) von Schichten (110), die dazu ausgestaltet ist, eine optische Funktion auszuführen, wobei jede Schicht (110) einen Brechungsindex (n10) und eine Dicke (e10) hat, und eine zweite Unteranordnung (S2) von Schichten (112), die dazu ausgestaltet ist, einen Schutz für die erste Anordnung (S1) von Schichten (110) auszuführen, wobei jede Schicht (112) einen Brechungsindex (n20) und eine Dicke (e20) hat,
- **dadurch gekennzeichnet, dass** die Gesamtdicke (e2) der zweiten Unteranordnung (S2) von Schichten (112) so dimensioniert ist, dass die Gesamtdicke (e0) des Schichtensystems (11) gleich dem m-Fachen einer Wellenlänge (λ) des Bereichs (Δ1), dividiert durch das Zweifache des äquivalenten Brechungsindex ($n_{eq0}$) der ersten Unteranordnung (S1) von Schichten (110) und der zweiten Unteranordnung (S2) von Schichten (112), multipliziert mit dem Cosinus eines Brechungswinkels (r), der dem Einfallswinkel (θ) der Radarwellen (R1) entspricht, ist, wobei m ganzzahlig ist.

2. Fahrzeuganordnung (1) nach Anspruch 1, wobei der Radarsensor (10) ein Radarsensor mit millimetrischen Wellen oder Hyperfrequenzen oder Mikrowellen ist.

3. Fahrzeuganordnung (1) nach dem vorhergehenden Anspruch, wobei die Radarwellen (R1) über ein Frequenzband zwischen 100 MHz und 5 GHz ausgesendet werden.

4. Fahrzeuganordnung (1) nach einem der vorhergehenden Ansprüche, wobei, wenn der Einfallswinkel (θ) gleich null ist, die Gesamtdicke (e2) der zweiten Unteranordnung (S2) von Schichten (112) so dimensioniert ist, dass die Gesamtdicke (e0) des Schichtensystems (11) gleich der Wellenlänge (λ), dividiert durch das Zweifache des äquivalenten Brechungsindex ($n_{eq0}$) der ersten Unteranordnung (S1) von Schichten (110) und der zweiten Unteranordnung (S2) von Schichten (112), ist.

5. Fahrzeuganordnung (1) nach einem der vorhergehenden Ansprüche, wobei die Gesamtdicke (e0) mit einem Einfallswinkel (θ) gleich arctan(d1/(2e4)) definiert ist, wobei e4 der Abstand zwischen dem Radarsensor (10) und dem Schichtensystem (11) ist und d1 der Abstand zwischen einer Sendeantenne (100) und Empfangsantennen (101) des Radarsensors (10) ist.

6. Fahrzeuganordnung (1) nach einem der vorhergehenden Ansprüche, wobei die zweite Unteranordnung (S2) von Schichten (112) eine Ausgangsschicht (112a) und eine Schutzschicht (112b) umfasst.

7. Fahrzeuganordnung (1) nach dem vorhergehenden Anspruch, wobei die Ausgangsschicht (112a) einen Brechungsindex (n20a) besitzt, der eine Differenz zu einem äquivalenten Brechungsindex ($n_{eq1}$) der ersten Unteranordnung (S1) von Schichten (110) von weniger als 0,1 aufweist.

8. Fahrzeuganordnung (1) nach dem vorhergehenden Anspruch, wobei die Ausgangsschicht (112a) einen Brechungsindex (n20a) besitzt, der eine Differenz zu einem äquivalenten Brechungsindex ($n_{eq1}$) der ersten Unteranordnung (S1) von Schichten (110) von weniger als 0,05 aufweist.

9. Fahrzeuganordnung (1) nach einem der vorhergehenden Ansprüche, wobei jede Schicht (110) der ersten Unteranordnung (S1) einen Brechungsindex (n10) besitzt, der eine Differenz zu dem Brechungsindex (n10) einer benachbarten Schicht (110) von weniger als 0,1 aufweist.

10. Fahrzeuganordnung (1) nach dem vorhergehenden Anspruch, wobei jede Schicht (110) der ersten Unteranordnung (S1) einen Brechungsindex (n10) besitzt, der eine Differenz zu dem Brechungsindex (n10) einer benachbarten Schicht (110) von weniger als 0,05 aufweist.

11. Fahrzeuganordnung (1) nach einem der vorhergehenden Ansprüche, wobei die erste Unteranordnung (S1) von Schichten (110) umfasst:

  - eine Filmschicht (110d),
  - eine streuende Schicht (110e),
  - eine reflektierende Schicht (110f), und
  - eine undurchsichtige Schicht (110g).

12. Fahrzeuganordnung (1) nach einem der vorhergehenden Ansprüche, wobei das Schichtensystem (11) ein nicht beleuchtetes Logo bildet.

13. Fahrzeuganordnung (1) nach einem der vorhergehenden Ansprüche 1 bis 11, wobei das Schichtensystem (11) ein beleuchtetes Logo bildet.

14. Fahrzeuganordnung (1) nach dem vorhergehenden Anspruch, wobei die erste Unteranordnung (S1) von Schichten (110) ferner eine optische Schicht (110c) umfasst.

15. Schichtensystem (11), das gegenüber einem Radarsensor (10) angeordnet ist, wobei der Radarsensor (10) dazu ausgestaltet ist, Radarwellen (R1) über einen Bereich (Δ1) von Wellenlängen (λ) auszusenden, das Schichtensystem (11) umfassend eine erste Unteranordnung (S1) von Schichten (110), die dazu ausgestaltet ist, eine optische Funktion auszuführen, wobei jede Schicht (110) einen Brechungsindex (n10) und eine Dicke (e10) hat, und eine zweite Unteranordnung (S2) von Schichten (112), die dazu ausgestaltet ist, einen Schutz für die erste Anordnung (S1) von Schichten (110) auszuführen, wobei jede Schicht (112) einen Brechungsindex (n20) und eine Dicke (e20) hat,

  - **dadurch gekennzeichnet, dass** die Gesamtdicke (e2) der zweiten Unteranordnung (S2) von Schichten (112) so dimensioniert ist, dass die Gesamtdicke (e0) des Schichtensystems (11) gleich dem m-Fachen einer Wellenlänge (λ) des Bereichs (Δ1), dividiert durch das Zweifache des äquivalenten Brechungsindex ($n_{eq0}$) der ersten Unteranordnung (S1) von Schichten (110) und der zweiten Unteranordnung (S2) von Schichten (112), multipliziert mit dem Cosinus eines Brechungswinkels (r), der dem Einfallswinkel (θ) der Radarwellen (R1) entspricht, ist, wobei m ganzzahlig ist.

**Claims**

1. Vehicle assembly (1) for a vehicle (2), said vehicle assembly (1) comprising:

  - one or more light sources (12);
  - a radar sensor (10) configured to emit radar waves (R1) over a range (Δ1) of wavelengths (A); and
  - an arrangement of layers (11) disposed facing said radar sensor (10), comprising a first subset (S1) of layers (110) configured to perform an optical function, with each layer (110) having a refractive index (n10) and a thickness (e10), and a second subset (S2) of layers (112) configured to provide protection for said first set (S1) of layers (110), with each layer (112) having a refractive index (n20) and a thickness (e20);
  - **characterized in that** the total thickness (e2) of the second subset (S2) of layers (112) is dimensioned so that the total thickness (e0) of the arrangement of layers (11) is equal to m times a wavelength (λ) of said range (Δ1) divided by twice the equivalent refractive index ($n_{eq0}$) of the first subset (S1) of layers (110) and of the second subset (S2) of layers (112), times the cosine of a refracted angle (r) corresponding to the angle of incidence (θ) of the radar waves (R1), where m is an integer.

2. Vehicle assembly (1) according to Claim 1, wherein said radar sensor (10) is a millimetre wave or a hyperfrequency wave or a microwave radar sensor.

3. Vehicle assembly (1) according to the preceding claim, wherein said radar waves (R1) are emitted over a frequency band ranging between 100 MHz and 5 GHz.

4. Vehicle assembly (1) according to any one of the preceding claims, wherein, if the angle of incidence ($\theta$) is equal to zero, then the total thickness (e2) of the second subset (S2) of layers (112) is dimensioned so that the total thickness (e0) of the arrangement of layers (11) is equal to said wavelength ($\lambda$) divided by twice the equivalent refractive index ($n_{eq0}$) of the first subset (S1) of layers (110) and of the second subset (S2) of layers (112).

5. Vehicle assembly (1) according to any one of the preceding claims, wherein the total thickness (e0) is defined with an angle of incidence ($\theta$) equal to arctan (d1/(2e4)), with e4 being the distance between said radar sensor (10) and said arrangement of layers (11) and d1 being the distance between an emitter antenna (100) and receiver antennas (101) of said radar sensor (10).

6. Vehicle assembly (1) according to any one of the preceding claims, wherein the second subset (S2) of layers (112) comprises an output layer (112a) and a protective layer (112b).

7. Vehicle assembly (1) according to the preceding claim, wherein said output layer (112a) has a refractive index (n20a) that has a difference with an equivalent refractive index ($n_{eq1}$) of the first subset (S1) of layers (110) of less than 0.1.

8. Vehicle assembly (1) according to the preceding claim, wherein said output layer (112a) has a refractive index (n20a) that has a difference with an equivalent refractive index ($n_{eq1}$) of the first subset (S1) of layers (110) of less than 0.05.

9. Vehicle assembly (1) according to any one of the preceding claims, wherein each layer (110) of the first subset (S1) has a refractive index (n10) that has a difference with the refractive index (n10) of an adjacent layer (110) of less than 0.1.

10. Vehicle assembly (1) according to the preceding claim, wherein each layer (110) of the first subset (S1) has a refractive index (n10) that has a difference with the refractive index (n10) of an adjacent layer (110) of less than 0.05.

11. Vehicle assembly (1) according to any one of the preceding claims, wherein the first subset (S1) of layers (110) comprises:

   - a film layer (110d);
   - a scattering layer (110e);
   - a reflective layer (110f); and
   - an opaque layer (110g).

12. Vehicle assembly (1) according to any one of the preceding claims, wherein the arrangement of layers (11) forms a non-illuminated logo.

13. Vehicle assembly (1) according to any one of the preceding Claims 1 to 11, wherein the arrangement of layers (11) forms an illuminated logo.

14. Vehicle assembly (1) according to the preceding claim, wherein the first subset (S1) of layers (110) further comprises an optical layer (110c).

15. Arrangement of layers (11) disposed facing a radar sensor (10), said radar sensor (10) being configured to emit radar waves (R1) over a range ($\Delta 1$) of wavelengths (A), said arrangement of layers (11) comprising a first subset (S1) of layers (110) configured to perform an optical function, with each layer (110) having a refractive index (n10) and a thickness (e10), and a second subset (S2) of layers (112) configured to provide protection for the first set (S1) of layers (110), with each layer (112) having a refractive index (n20) and a thickness (e20),

   - **characterized in that** the total thickness (e2) of the second subset (S2) of layers (112) is dimensioned so that the total thickness (e0) of the arrangement of layers (11) is equal to m times a wavelength ($\lambda$) of said range ($\Delta 1$) divided by twice the equivalent refractive index ($n_{eq0}$) of the first subset (S1) of layers (110) and of the second subset (S2) of layers (112), times the cosine of a refracted angle (r) corresponding to the angle of incidence ($\theta$) of the radar

waves (R1), where m is an integer.

[Fig. 1]

[Fig. 2]

[Fig. 3]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102011115829 A1
- EP 3644087 A1

- US 2018351274 A1